# EUROPÄISCHE PATENTSCHRIFT

(11) **EP 1 330 132 B1**
(45) Veröffentlichungstag und Bekanntmachung des Hinweises auf die Patenterteilung: **09.01.2013**
(21) Anmeldenummer: 02024856.3
(22) Anmeldetag: 08.11.2002
(51) Int. Cl.: H04N 13/02, G06T 7/00

(54) **Verfahren und Vorrichtung zur Verdeckungsdetektion bei Bildsensorsystemen**
Method and apparatus for occlusion detection in image sensor systems
Méthode et dispositif de détection d'occlusions dans des systèmes de capteurs d'images

(30) Priorität: 17.01.2002 DE 10201523
(43) Veröffentlichungstag der Anmeldung: 23.07.2003
(73) Patentinhaber: ROBERT BOSCH GMBH, 70442 Stuttgart (DE)
(72) Erfinder: Franz, Matthias, 72074 Tuebingen (DE)

(56) Entgegenhaltungen:
- WO-A-02/061370
- WO-A-03/061300
- US-A1- 2001 019 356

## Beschreibung

### Stand der Technik

Die Erfindung betrifft ein Verfahren und eine Vorrichtung zur Verdeckungsdetektion bei Bildsensorsystemen, bestehend aus wenigstens zwei Bildsensoren.

Bildsensorsysteme, die aus wenigstens zwei Bildsensoren bestehen, welche im Wesentlichen dieselbe Szene aufnehmen (sogenannte Stereokamerasysteme), werden zukünftig insbesondere im Kraftfahrzeugbereich eingesetzt, z.B. im Rahmen eines Fahrerassistenzsystems zur Objekterkennung. Da die aufgenommenen Bilder in nachfolgenden Systemen ausgewertet werden, muß das Bildsensorsystem für eine sichere Funktion und für eine Sicherstellung der Qualität der Bilder sorgen, seine eigene Funktionsfähigkeit testen, bei auftretenden Fehlern reagieren und insbesondere nachfolgende, die Bilder auswertenden Systeme über das Auftreten und gegebenenfalls die Art des Fehlers informieren. Ein Fehlerzustand, welcher die Funktionsfähigkeit des Bildsensorsystems bzw. die Qualität der gelieferten Bilder beeinträchtigen kann, ist die Verdeckung des Sichtbereichs einer der Bildsensoren durch Störobjekte. Derartige Fälle treten insbesondere im Kraftfahrzeugbereich auf, wenn beispielsweise bei Regen der Scheibenwischer kurzzeitig durch das Kamerabild läuft oder die Windschutzscheibe vor einer Kamera verschmutzt ist. Eine solche Verdeckung hat beispielsweise bei einer stereoskopischen Bestimmung von Abständen zu Objekten störende Einwirkungen.

In der US 2001/019356 A1 werden Bilder einer Szene mittels einer ersten und einer zweiten Kamera aus unterschiedlichen Sichtwinkeln aufgenommen. Das Bild der ersten Kamera wird in Abhängigkeit von geometrischen Parametern in eine Vielzahl weiterer Bilder transformiert Diese Vielzahl von Bildern wird anschließend mit einem entsprechenden Bild der zweiten Kamera verglichen, wobei ein Konsistentzmaß ermittelt wird, auf dessen Basis Hindernisse erkannt werden.

### Vorteile der Erfindung

Durch die Bildung eines die Verdeckung eines Bildsensors eines Bildsensorsystems anzeigenden Signals bei unzulässigen Unterschieden in wenigstens einem charakteristischen Merkmal in den von den wenigstens zwei Bildsensoren aufgenommenen Bildern werden in vorteilhafter Weise Verdeckungen eines der Bildsensoren erkannt und gegebenenfalls an nachfolgende Systeme weitergemeldet.

In vorteilhafter Weise können daher diese geeignet auf eine solche Verdeckungsmeldung reagieren, beispielsweise indem sie bei einer stereoskopischen Bestimmung von Objektdistanzen die von den Verdeckungen betroffenen Bilder ausblenden und auf eine Objekterkennung verzichten.

In vorteilhafter Weise wird die Verdeckung durch Messung des Bildunterschiedes von wenigstens zwei Bildern eines Bildsensorsystems bestehend aus wenigstens zwei Bildsensoren ermittelt. Bei der Messung des Bildunterschieds wird dabei in vorteilhafter Weise die ohnehin bestehenden Unterschiede in Folge von unterschiedlichen Sehwinkeln der Bildsensoren zwischen den Bildern berücksichtigt. Somit wird insbesondere zur Messung des Bildunterschieds ein sprunghafter Anstieg dieses Unterschieds ausgewertet.

In vorteilhafter Weise wird dadurch das Bildsensorsystem in die Lage versetzt, einen wichtigen Aspekt seiner Funktionsfähigkeit selbst zu überprüfen und bei Vorliegen eines Verdeckungsfehlers andere Systeme zu informieren.

Als besonders vorteilhaft hat sich eine Messung des Bildunterschieds direkt auf der Basis von Grauwerten des Bildes, etwa durch Bestimmung der Pixeldifferenzen oder durch Berechnung der Korrelation der Bilder oder anhand von Differenzen in sekundären Bildmerkmalen wie beispielsweise dem Histogramm der Grauwerte, erwiesen.

Vorteilhaft ist nicht nur die Anwendung der Verdeckungserkennung bzw. Verdeckungsmeldung bei Stereokamerasystemen in Kraftfahrzeugen, sondern in allen den Bildsensorkonfigurationen, bei denen zwei oder mehrere Bildsensoren die gleiche Szene abbilden, sowohl im Bereich der Kraftfahrzeugtechnik als auch außerhalb davon.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellte Ausführungsform näher erläutert. Die einzige Figur zeigt dabei ein Übersichtsbild eines Stereokamerasystems mit Auswerteeinheit, die zur Bildung eines die Verdeckung eines der Kameras anzeigenden Signals ausgestaltet ist.

### Beschreibung von Ausführungsbeispielen

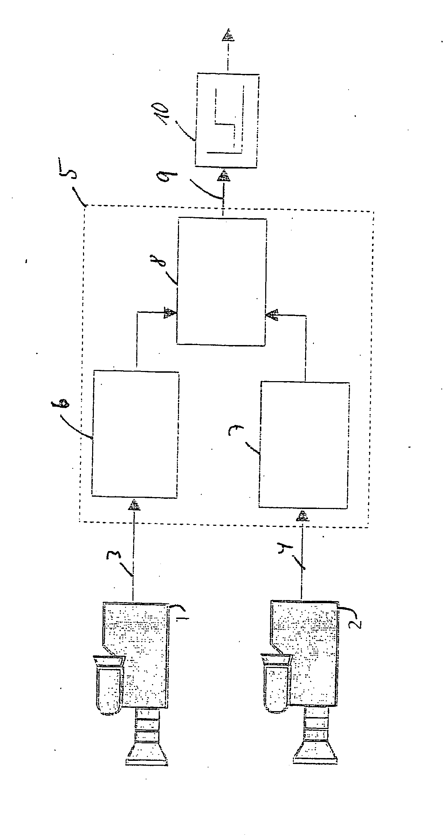

Figur 1 zeigt ein Übersichtsbild eines Stereokamerasystems mit einer ersten Kamera 1 und einer zweiten Kamera 2. Beide Kameras sind so angeordnet, dass sie dieselbe Szene abbilden, allerdings unter einem etwas unterschiedlichen Sichtwinkel. Somit ermitteln beide Kameras Bilder der beobachteten Szene, die sie über die Datenleitungen 3 und 4 an eine Auswerteeinheit 5 abgeben. Die Auswerteeinheit 5 besteht aus mehreren Modulen, die im bevorzugten Ausführungsbeispiel als Programme eines Mikroprozessors oder mehrerer Mikroprozessoren ausgestaltet sind. Zur Verdeckungserkennung sind jeder Kamera zugeordnete Merkmalsbestimmungsmodule 6 bzw. 7 vorgesehen, welche aus dem jeweils zugelieferten Bild wenigstens ein typisches Merkmal ermitteln. Ein Vergleichsmodul 8 vergleicht dieses wenigstens eine Merkmal der beiden Bilder. Bestehen unzulässige Abweichungen, ändert sich insbesondere der ohnehin bestehende Unterschied sprunghaft oder überteigt die Abweichung eine vorgegebene Schwelle, wird ein Fehlersignal erzeugt, welches über die Datenleitung 9 an nachfolgende Systeme weitergegeben wird. In einem Ausführungsbeispiel ist ein Verzögerungselement 10 vorgesehen, welches ein Fehlersignal für andere Systeme erst dann erzeugt, wenn eine bestimmte Anzahl von Vergleichsoperationen unzulässige Unterschiede zwischen den beiden Bildern ermitteln oder dieses Ergebnis mit einer bestimmten Häufigkeit auftritt (bei Auswertung sprungförmiger Änderungen, wenn die Änderung eine bestimmte Zeit lang vorhanden bleibt).

Je nach Ausführungsbeispiel stehen als Bildmerkmale primäre oder sekundäre Bildmerkmale zur Verfügung. Ein Beispiel für ein primäres Bildmerkmal wäre der Vergleich von Grauwerten einzelner Pixel, wobei ein Fehler dann erkannt wird, wenn der Unterschied der Grauwerte in einem oder einer vorgegebenen Anzahl von Pixeln sprunghaft sich ändert, oder wenn der Unterschied einen vorgegebenen Schwellenwert überschreitet. Ferner kann der Bildunterschied durch Bestimmung der Korrelationsfunktion der Bilder ermittelt werden, wobei bei einer fehlenden Korrelation, d.h. einem entsprechenden Verlauf der Korrelationsfunktion, ein Verdeckungsfehler erkannt wird. Diese Situation wird anhand der Größe und/oder Form der Korrelationsfunktion bestimmt. Sekundäre Bildmerkmale sind insbesondere die Histogramme der Grauwerte der beiden Bilder, aus denen bei unzulässigen Unterschieden im Rahmen der Vergleichsoperation das Fehlersignal abgeleitet wird. Dabei wird z.B. eine sprungförmige Änderung des Schwerpunktes des Histogramm oder seiner Form oder die nachfolgend beschriebenen Merkmalsvektoren ausgewertet.

In der in der Figur dargestellten Ausführung wird die Bildunterschiedsmessung über eine Extraktion von Bildmerkmalen realisiert. Diese Bildmerkmale sind entweder die Histogramme der Grauwerte des jeweiligen Bildes oder auch eine Liste detektierter Objekte. Die gewonnenen Merkmalsvektoren (Liste der Objekte, Liste der Grauwerthäufigkeit, etc.) werden dann im Vergleichsmodul miteinander verglichen und durch ein Unterschiedsmaß charakterisiert. Dieses Unterschiedsmaß ist im einfachsten Fall ein Abstandsmaß zwischen den beiden Merkmalsvektoren oder das Skalarprodukt der beiden Vektoren. Überschreitet dieses Unterschiedsmaß beider Bilder- oder Merkmalsvektoren einen vorgegebenen Schwellenwert, der die Bildunterschiede durch die unterschiedlichen Sehwinkeln der Bildsensoren berücksichtigt, wird eine Verdeckung erkannt. Diese Erkennung wird mittels des erzeugten Signals zusammen mit den Bildern in geeigneter Weise an die nachfolgenden Systeme weitergemeldet.

Eine typische Situation, bei welcher die Verdeckung erkannt wird, ist die Verdeckung einer der beiden Kameras mit einem hinreichend großen Gegenstand. In diesem Fall signalisiert das Bildsensorsystem bzw. bei Einbeziehung des Bildsensorsystems in ein Gesamtsystem einen entsprechenden Fehler.

Die beschriebene Vorgehensweise ist nicht auf die Anwendung von Bildsensorsystemen, die aus zwei Bildsensoren bestehen, im Kraftfahrzeug eingeschränkt. Vielmehr läßt sich die beschriebene Vorgehensweise mit den entsprechenden Merkmalen aus außerhalb der Kraftfahrzeugtechnik einsetzen, ferner bei Systemen mit mehr als zwei Kameras, bei denen die Vergleiche der Bilder der einzelnen Kameras untereinander erfolgt. Voraussetzung ist lediglich, dass die verwendeten Bildsensoren dieselbe Szene aufnehmen.

## Patentansprüche

1. Verfahren zur Verdeckungsdetektion bei Bildsensorsystemen, wobei wenigstens zwei Bildsensoren vorgesehen sind, die im Wesentlichen dieselbe Szene aufnehmen, wobei aus von den Bildsensoren erzeugten Bildern Bildmerkmale extrahiert werden, **dadurch gekennzeichnet, dass** ein die Verdeckung eines Bildsensors anzeigendes Signal erzeugt wird, wenn die von den Bildsensoren erzeugten Bilder in wenigstens einem Merkmal unzulässig voneinander abweichen, wobei aus den ermittelten Bildmerkmalen ein Unterschiedsmaß der beiden Bilder ermittelt wird und dieses Unterschiedsmaß mit einer vorgegebenen Schwelle verglichen wird, und/oder wenn ein unzulässiger Unterschied in wenigstens einem Bildmerkmal erkannt wird, wenn sich ein in Folge von unterschiedlichen Sehwinkeln der Bildsensoren bestehender Unterschied sprungförmig ändert.

2. Verfahren nach einem der vorhergehenden Ansprüche, **dadurch gekennzeichnet, dass** das zu vergleichende Bildmerkmal das Histogramm der Grauwerte des jeweiligen Bildes ist.

3. Verfahren nach Anspruch 1, **dadurch gekennzeichnet, dass** das Bildmerkmal eine Liste von erkannten Objekten ist.

4. Verfahren nach Anspruch 1, **dadurch gekennzeichnet, dass** das Bildmerkmal die Grauwerte einzelner Pixel des Bildes ist.

5. Verfahren nach Anspruch 4, **dadurch gekennzeichnet, dass** die Büdunterschiede aus den Grauwerten des Bildes durch Bestimmung von Pixeldifferenzen oder durch Bestimmung der Korrelation der Bilder ermittelt werden.

6. Verfahren nach einem der Ansprüche 2 oder 3, **dadurch gekennzeichnet, dass** die Bildmerkmale als Merkmalsvektoren dargestellt werden, die miteinander verglichen werden.

7. Verfahren nach einem der vorhergehenden Ansprüche, **dadurch gekennzeichnet, dass** in dem Fall, wenn aus den ermittelten Bilmerkmalen ein Unterschiedsmaß der beiden Bilder ermittelt wird und dieses Untershieldsmaß mit einer vorgegebenen Schwelle verglichen wird, bei Überschreiten der Schwelle eine Verdeckung erkannt wird.

8. Vorrichtung zur Detektion von Verdeckungen In Bildsensorsystemen mit wenigstens zwei Bildsensoren, die im Wesentlichen dieselbe Szene aufnehmen, mit einer Auswerteeinheit, die die von den Bildsensoren erzeugten Bilder auswertet, wobei aus von den Bildsensoren erzeugten Bildern Bildmerkmale extrahiert werden, **dadurch gekennzeichnet, dass** die Auswerteeinheit Mittel aufweist, welche ein Signal erzeugen, wenn wenigstens ein Merkmal der Bilder der Bildsensoren unzulässig voneinander abweicht, wobei aus den ermittelten Bildmerkmalen ein Unterschiedsmaß der beiden Bilder ermittelt wird und dieses Unterschiedsmaß mit einer vorgegebenen Schwelle verglichen wird, und/oder wenn ein unzulässiger Unterschied in wenigstens einem Blidmerkmal erkannt wird, wenn sich ein in Folge von unterschiedlichen Sehwinkeln der Bildsensoren bestehender Unterschied sprungförmig ändert.

9. Vorrichtung nach Anspruch 8, **dadurch gekennzeichnet, dass** das Biidsensorsystem ein Stereokamerasystem im Kraftfahrzeug ist.

## Claims

1. Method for occlusion detection in image sensor systems, at least two image sensors being provided which record substantially the same scene, image features being extracted from images produced by the image sensors, **characterized in that** a signal indicating the occlusion of an image sensor is produced when the images produced by the image sensors deviate from one another impermissibly in at least one feature, a difference measure of the two images being determined from the determined image features and said difference measure being compared with a prescribed threshold, and/or when an impermissible difference is detected in at least one image feature when a difference existing as a consequence of different viewing angles of the image sensors changes suddenly.

2. Method according to Claim 1, **characterized in that** the image feature to be compared is the histogram of the gray-scale values of the respective image.

3. Method according to Claim 1, **characterized in that** the image feature is a list of detected objects.

4. Method according to Claim 1, **characterized in that** the image feature is the gray-scale values of individual pixels of the image.

5. Method according to Claim 4, **characterized in that** the image differences are determined from the gray-scale values of the image by determining pixel differences or by determining the correlation of the images.

6. Method according to either of Claims 2 and 3, **characterized in that** the image features are displayed as feature vectors which are compared with one another.

7. Method according to one of the preceding claims, **characterized in that** in the case when a difference measure of the two images is determined from the determined image features and said difference measure is compared with a prescribed threshold, an occlusion is detected upon overshooting of the threshold.

8. Apparatus for detecting occlusions in image sensor systems with at least two image sensors which record substantially the same scene, with an evaluation unit which evaluates the images produced by the image sensors, image features being extracted from images produced by the image sensors, **characterized in that** the evaluation unit has means which produce a signal when for at least one feature the images of the image sensors deviate from one another impermissibly, a difference measure of the two images being determined from the determined image features and said difference measure being compared with a prescribed threshold, and/or when an impermissible difference is detected in at least one image feature when a difference existing as a consequence of different viewing angles of the image sensors changes suddenly.

9. Apparatus according to Claim 8, **characterized in that** the image sensor system is a stereo camera system in a motor vehicle.

## Revendications

1. Procédé de détection de l'occultation sur des systèmes à capteur d'image, au moins deux capteurs d'image étant prévus, lesquels enregistrent pour l'essentiel la même scène, des caractéristiques d'image étant extraites des images générées par les capteurs d'image, **caractérisé en ce qu'**un signal indiquant l'occultation d'un capteur d'image est généré lorsque les images générées par les capteurs d'image présentent un écart non admissible entre elles dans au moins une caractéristique, un indice de différence entre les deux images étant déterminé à partir des caractéristiques d'image déterminées et cet indice de différence étant comparé avec un seuil prédéfini, et/ou lorsqu'une différence non admissible est reconnue dans au moins une caractéristique d'image, lorsqu'une différence existante dans une séquence d'angles de vision différents des capteurs d'image varie brutalement.

2. Procédé selon la revendication 1, **caractérisé en ce que** la caractéristique d'image à comparer est l'histogramme des niveaux de gris de l'image correspondante.

3. Procédé selon la revendication 1, **caractérisé en ce que** la caractéristique d'image est une liste d'objets reconnus.

4. Procédé selon la revendication 1, **caractérisé en ce que** la caractéristique d'image est les niveaux de gris des pixels individuels de l'image.

5. Procédé selon la revendication 4, **caractérisé en ce que** les différences d'image résultant des niveaux de gris de l'image sont déterminées en définissant des différences de pixel ou en définissant la corrélation des images.

6. Procédé selon l'une des revendications 2 ou 3, **caractérisé en ce que** les caractéristiques d'image sont représentées sous la forme de vecteurs de caractéristique qui sont comparés entre eux.

7. Procédé selon l'une des revendications précédentes, **caractérisé en ce que** dans le cas où un indice de différence entre les deux images est déterminé à partir des caractéristiques d'image déterminées et que cet indice de différence est comparé avec un seuil prédéfini, une occultation est reconnue en cas de dépassement du seuil.

8. Dispositif de détection d'occultations dans des systèmes à capteur d'image comprenant au moins deux capteurs d'image, lesquels enregistrent pour l'essentiel la même scène, avec une unité d'interprétation qui interprète les images générées par les capteurs d'image, des caractéristiques d'image étant extraites des images générées par les capteurs d'image, **caractérisé en ce que** l'unité d'interprétation présente des moyens qui génèrent un signal lorsque les images des capteurs d'image présentent un écart non admissible entre elles dans au moins une caractéristique, un indice de différence entre les deux images étant déterminé à partir des caractéristiques d'image déterminées et cet indice de différence étant comparé avec un seuil prédéfini, et/ou lorsqu'une différence non admissible est reconnue dans au moins une caractéristique d'image, lorsqu'une différence existante dans une séquence d'angles de vision différents des capteurs d'image varie brutalement.

9. Dispositif selon la revendication 8, **caractérisé en ce que** le système à capteurs d'image est un système à caméra stéréoscopique dans un véhicule automobile.
